# EUROPÄISCHE PATENTSCHRIFT

(11) **EP 2 328 677 B1**
(45) Veröffentlichungstag und Bekanntmachung des Hinweises auf die Patenterteilung: **14.08.2013**
(21) Anmeldenummer: 09778627.1
(22) Anmeldetag: 21.09.2009
(51) Int. Cl.: B01F 7/04, B01F 7/00, B01F 15/00

(54) **VORRICHTUNG ZUR DURCHFÜHRUNG VON MECHANISCHEN, CHEMISCHEN UND/ODER THERMISCHEN PROZESSEN**
DEVICE FOR CARRYING OUT MECHANICAL, CHEMICAL AND/OR THERMAL PROCESSES
DISPOSITIF POUR METTRE EN OEUVRE DES PROCEDES MECANIQUES, CHIMIQUES ET/OU THERMIQUES

(30) Priorität: 23.09.2008 DE 102008048580
(43) Veröffentlichungstag der Anmeldung: 08.06.2011
(73) Patentinhaber: LIST Holding AG, 4422 Arisdorf (CH)
(72) Erfinder: ARNAUD, Daniel, F-68560 Hiersingue (FR); KUNZ, Alfred, CH-4132 Muttenz (CH); FLEURY, Pierre, Alain, CH-4433 Ramlinsburg (CH)
(74) Vertreter: Weiss, Peter
(86) Internationale Anmeldenummer: PCT/EP2009/006796
(87) Internationale Veröffentlichungsnummer: WO 2010/034446

(56) Entgegenhaltungen:
- EP-A- 1 714 694
- CH-A- 506 322
- DE-C1- 10 150 900

## Beschreibung

Die vorliegende Erfindung betrifft eine Vorrichtung zur Durchführung von mechanischen, chemischen und/oder thermischen Prozessen in einem Gehäuse mit Misch- und Putzelementen an Wellen, wobei die Misch- und Putzelemente der Wellen bei deren Drehung um ihre Achsen ineinander greifen und zumindest auf einer Welle jeweils zwei in axialer Richtung aufeinander folgende Misch- und Putzelemente um 180° drehsymmetrisch zueinander um die Achse der Welle auf dieser angeordnet sind.

### Stand der Technik

Derartige Vorrichtungen werden auch als Mischkneter bezeichnet. Sie dienen sehr vielfältige Zwecken. Als erstes ist das Eindampfen mit Lösungsmittelrückgewinnung zu erwähnen, welches chargenweise oder kontinuierlich und oft auch unter Vakuum erfolgt. Hierdurch werden beispielsweise Destillationsrückstände und insbesondere Toluoldiisocyanate behandelt, aber auch Produktionsrückstände mit toxischen oder hochsiedenden Lösungsmitteln aus der Chemie und Pharmaproduktion, Waschlösungen und Lack-Schlämme, Polymerlösungen, Elastomerlösungen aus der Lösemittelpolymerisation, Klebstoffe und Dichtmassen.

Mit den Apparaten wird ferner eine kontinuierliche oder chargenweise Kontakttrocknung, Wasser- und/oder lösemittelfeuchter Produkte, oftmals ebenfalls unter Vakuum, durchgeführt. Die Anwendung ist vor allem gedacht für Pigmente, Farbstoffe, Feinchemikalien, Additive, wie Salze, Oxyde, Hydroxyde, Antioxydantien, temperaturempfindliche Pharma- und Vitaminprodukte, Wirkstoffe, Polymere, synthetische Kautschuke, Polymersuspensionen, Latex, Hydrogele, Wachse, Pestizide und Rückstände aus der chemischen oder pharmazeutischen Produktion, wie Salze, Katalysatoren, Schlacken, Ablaugen gedacht. Anwendung finden diese Verfahren auch in der Lebensmittelproduktion, beispielsweise bei der Herstellung und/oder Behandlung von Blockmilch, Zuckeraustauschstoffen, Stärkederivaten, Alginaten, zur Behandlung von Industrieschlämmen, Ölschlämmen, Bioschlämmen, Papierschlämmen, Lackschlämmen und allgemein zur Behandlung von klebrigen, krustenden zähpastösen Produkte, Abfallprodukten und Zellulosederivaten.

In Mischknetern kann ein Entgasen und/oder Devolatilisieren stattfinden. Angewendet wird dies auf Polymerschmelzen, nach Kondensation von Polyester oder Polyamidschmelzen, auf Spinnlösungen für synthetische Fasern und auf Polymer- oder Elastomergranulate bzw -pulver im festen Zustand.

In einem Mischkneter kann eine Polykondensationsreaktion, meist kontinuierlich und meist in der Schmelze, stattfinden und wird vor allem verwendet bei der Behandlung von Polyamiden, Polyester, Polyacetaten, Polyimide, Thermoplaste, Elastomere, Silikone, Harnstoffharze, Phenolharze, Detergentien und Düngemittel.

Stattfinden kann auch eine Polymerisationsreaktion, ebenfalls meist kontinuierlich. Dies wird angewendet auf Polyakrylate, Hydrogele, Polyole, thermoplastische Polymere, Elastomere, syndiotaktisches Polysterol und Polyacrylamide.

Ganz allgemein können im Mischkneter Reaktionen fest, flüssig und mehrphasige Reaktionen stattfinden. Dies gilt vor allem für Backreaktionen, bei der Behandlung von Flusssäure, Stearaten, Zyanaten, Polyphosphaten, Cyanursäuren, Zellulosederivaten, -ester, -äther, Polyacetalharzen, Sulfanilsäuren, Cu-Phthalocyaninen, Stärkederivaten, Ammoniumpolyphosphaten, Sulfonaten, Pestiziden und Düngemittel.

Des weiteren können Reaktionen fest-/gasförmig (z.B. Karboxylierung) oder flüssig-/gasförmig stattfinden. Angewendet wird dies bei der Behandlung von Acetaten, Aciden, Kolbe-Schmitt-Reaktionen, z.B. BON, Na-Salicylaten, Parahydroxibenzoaten und Pharmaprodukten.

Reaktionen flüssig/flüssig erfolgen bei Neutralisationsreaktionen und Umesterungsreaktionen.

Ein Lösen und/oder Entgasen in derartigen Mischknetern findet bei Spinnlösungen für synthetische Fasern, Polyamiden, Polyester und Zellulosen statt.

Ein sogenanntes Flushen findet bei der Behandlung bzw. Herstellung von Pigmenten statt.

Eine Solid-State- Nachkondensation findet bei der Herstellung bzw. Behandlung von Polyester und Polyamiden statt, ein kontinuierliches Anmeischen z.B. bei der Behandlung von Fasern, z.B. Zellulosefasern mit Lösungsmitteln, eine Kristallisation aus der Schmelze oder aus Lösungen bei der Behandlung von Salzen, Feinchemikalien, Polyolen, Alkoholaten, ein Compoundieren, Mischen (kontinuierlich und/oder chargenweise) bei Polymeren-Mischungen, Silikonmassen, Dichtmassen, Flugasche, ein Coagulieren (insbesondere kontinuierlich) bei der Behandlung von Polymersuspensionen.

In einem Mischkneter können auch multifunktionale Prozesse kombiniert werden, beispielsweise Erhitzen, Trocknen, Schmelzen, Kristallisieren, Mischen, Entgasen, Reagieren - dies alles kontinuierlich oder chargenweise. Hergestellt bzw. behandelt werden dadurch Polymere, Elastomere, anorganische Produkte, Rückstände, Pharmaprodukte, Lebensmittelprodukte, Druckfarben.

In Mischknetern kann auch eine Vakuumsublimation/ Desublimation stattfinden, wodurch chemische Vorprodukte, z.B. Anthrachinon, Metallchloride, metallorganische Verbindungen usw. gereinigt werden. Ferner können pharmazeutische Zwischenprodukte hergestellt werden.

Eine kontinuierliche Trägergas-Desublimation findet z.B. bei organischen Zwischenprodukten, z.B. Antrachinon und Feinchemikalien statt.

Ein Mischkneter der oben genannten Art ist beispielsweise in der DE 101 50 900 C1 genannt. Dort befinden sich auf den Wellen in Drehrichtung und in Achsrichtung der Wellen aufeinanderfolgende, entlang der Innenwandung des Gehäuses und in Richtung der Wellen bzw. schräg dazu verlaufende Knetbarren an einem Tagelement. Die Bahnen der Knetbarren an den beiden Wellen überlappen sich zumindest teilweise und beim Drehen greifen die Knetbarren an der einen Welle zwischen die Traglemente an der anderen Welle. Dabei sollen auf der Welle in Drehrichtung auf und/oder an einer radialen Ebene aufeinanderfolgend unterschiedlich dicke Tragelemente angeordnet sein.

Ein weiterer Mischkneter der oben genannten Art ist beispielsweise aus der EP 0 517 068 B1 bekannt. Bei ihm drehen in einem Mischergehäuse zwei achsparallel verlaufende Wellen entweder gegensinnig oder gleichsinnig. Dabei wirken auf Scheibenelementen aufgesetzte Mischbarren miteinander. Neben der Funktion des Mischens haben die Mischbarren die Aufgabe, produktberührte Flächen des Mischergehäuses, der Wellen und der Scheibenelemente möglichst gut zu reinigen und damit ungemischte Zonen zu vermeiden. Insbesondere bei stark kompaktierenden, aushärtenden und krustenden Produkten führt die Randgängigkeit der Mischbarren zu hohen örtlichen mechanischen

Belastungen der Mischbarren und der Wellen. Diese Kraftspitzen treten insbesondere beim Eingriff der Mischbarren in denjenigen Zonen auf, wo das Produkt schlecht ausweichen kann. Solche Zonen sind z.B. dort gegeben, wo die Scheibenelemente auf der Welle aufgesetzt sind.

Ferner ist aus der DE 199 40 521 A1 ein Mischkneter der o.g. Art bekannt, bei welchem die Tragelemente im Bereich der Knetbarren eine Ausnehmung ausbilden, damit der Knetbarren eine möglichst grosse axiale Erstreckung aufweist. Ein derartiger Mischkneter hat eine hervorragende Selbstreinigung aller produktberührten Flächen des Gehäuses und der Wellen, hat aber die Eigenschaft, dass die Tragelemente der Knetbarren aufgrund der Bahnen der Knetbarren Ausnehmungen erforderlich machen, die zu komplizierten Tragelementformen führen. Daraus resultiert zum einen ein aufwendiges Herstellungsverfahren und zum zweiten bei einer mechanischen Beanspruchung lokale Spannungsspitzen an der Welle und den Tragelementen. Diese Spannungsspitzen, welche hauptsächlich bei den scharfkantigen Ausnehmungen und Dickenänderungen, insbesondere im Bereich, wo die Tragelemente auf den Wellenkern aufgeschweisst sind, auftreten, sind Auslöser für Risse in der Welle und den Tragelementen aufgrund von Materialermüdung.

Im wesentlichen werden einwellige und zweiwellige Mischkneter unterschieden. Eine mehrwellige Misch- und Knetmaschine wird in der CH-A 506 322 beschrieben ist. Dort befinden sich auf einer Welle radiale Scheibenelemente und zwischen den Scheiben angeordnete axial ausgerichtete Knetbarren. Zwischen diese Scheiben greifen von der anderen Welle rahmenartig geformte Misch- und Knetelemente ein. Diese Misch- und Knetelemente reinigen die Scheiben und Knetbarren der ersten Welle. Die Knetbarren auf beiden Wellen reinigen wiederum die Gehäuseinnenwand.

Diese bekannten zweiwelligen Mischkneter haben den Nachteil, dass sie aufgrund des achtförmigen Gehäusequerschnitts im Bereich der Verbindung der beiden Wellengehäuse eine Schwachstelle aufweisen. In diesem Bereich entstehen bei der Verarbeitung zäher Produkte und/oder bei Prozessen, die unter Druck ablaufen, hohe Spannungen, die nur durch aufwendige konstruktive Massnahmen beherrscht werden können.

Weitere Probleme der zweiwelligen Maschinen sind im Bezug auf
- Abdichtung der Wellen gegen Druck oder extrem tiefes Vakuum Dichtungen,
- Explosionssicherheit der Gehäuse,
- Rundlaufgenauigkeit im Gehäuse und
- Gehäuseabdichtung
bekannt.

### Aufgabe

Aufgabe der vorliegenden Erfindung ist es, eine Vorrichtung der oben genannten Art, die nachfolgend als Mischkneter bezeichnet werden soll, wesentlich zu verbessern und zwar im Hinblick auf die Behandlung des Produktes und auch auf die Abreinigung der mit dem Produkt in Berührung kommenden Flächen sowie den Austrag des Produktes.

### Lösung der Aufgabe

Zur Lösung der Aufgabe führt, dass die Misch- und Putzelemente jeweils aus einem Scheibenelement bestehen und das Scheibenelement eine äussere Randkante aufweist, die um einen Radius in einem Bogensegment von 90° oder darüber um die Achse der Welle verläuft und an die beidseits zur Welle hin verlaufende Seitenkanten anschliessen, wobei auf der Randkante jeweils ein oder mehrere Barren aufsitzt/en.

Bei dieser Ausgestaltung kann nicht mehr, wie im Stand der Technik noch üblich, zwischen einer Putz- und einer Rührwelle unterschieden werden. Die Misch- und Putzelemente auf beiden Wellen haben sowohl Misch- als auch Putzaufgaben. Es erfolgt durch sie eine intensive und weitestgehende Abreinigung sämtlich mit dem Produkt in Berührung kommenden Flächen und Elementen. Dies gilt sowohl für die Innenwand des Gehäuses als auch für Misch- und Putzelemente selbst als auch für den Mantel der Wellen.

Bevorzugt sollen die Misch- und Putzelemente auf beiden Wellen identisch ausgebildet sein. Dies vereinfacht nicht nur die Herstellung und Wartung, sondern führt auch zu einer gleichmässigen Belastung der einzelnen Arbeitselemente, bspw. von Barren als Teile der Misch- und Putzelemente.

Ein wesentliches Merkmal der vorliegenden Erfindung bezieht sich auch auf die Ausgestaltung der Misch- und Putzelemente. Diese setzen sich jeweils aus einem Scheibenelement und zumindest einem, diesem Scheibenelement aufgesetzten, in axialer Richtung verlaufenden Barren zusammen. Die Scheibenelemente sind dabei aber bevorzugt so ausgestaltet, dass sie nur einen Teil des Knetraumes und, da sie um 180° drehsymmetrisch zueinander versetzt an der Achse angeordnet sind, auch nur immer einseitig den Knetraum begrenzen. Dies führt dazu, dass der Produktstrom wie in einem Labyrinth radial hin und her bei seiner Förderung von einem Eintrag zu einem Austrag geführt wird. Damit ist eine optimale Radialmischung gegeben, die bisher so nicht bekannt war.

Des weiteren wird durch die Anordnung der Scheibenelemente der Misch- und Putzelemente auch ein durchgängiger Gasraum geschaffen, was zu einer wesentlich verbesserten Austragung von verdampftem Lösungsmittel od.dgl. führt.

Die Scheibenelemente weisen eine äussere Randkante auf, die um einen Radius um die Achse der Welle verläuft. Dabei überdeckt das Scheibenelement in etwa ein Bogensegment von 90° oder geringfügig darüber.

Ferner ist vorgesehen, dass der Randkante des Scheibenelements bevorzugt beidends ein Barren aufgesetzt ist. Eine Abreinigung kann dadurch verbessert werden, dass sogar zwischen den beiden Barren ein Mittelbarren vorgesehen ist.

Bei einer derartigen Anordnung der Misch- und Putzelemente ist es bevorzugt auch vorgesehen, beide Wellen gleichläufig im Verhältnis 1:1 zu drehen. Bei dieser Gleichläufigkeit kommt es nicht zu dem sogenannten Walzstuhleffekt, der dazu führt, dass das Produkt, vor allem, wenn es sich um ein hochviskoses Produkt handelt, blockiert.

Ferner hat sich in der Praxis herausgestellt, dass die gleichen Geometrien beider Wellen und der Misch- und Putzelemente auf ihnen dazu führt, dass der Produktstrom wesentlich gleichmässiger fliesst. Ferner ist durch die gewählte Anordnung ein hoher Selbstreinigungseffekt gegeben, der wiederum auch zu einer besseren (engern) Verweilzeitverteilung und gleichzeitig zu intensiver Misch- und Knetwirkung führt.

Im übrigen erlauben die gewählten Misch- und Putzelemente auch die Möglichkeit einer sehr guten Rückmischung, sofern die Förderelemente, insbesondere die Barren, entsprechend angestellt werden. Dementsprechend ist die gewählte Anordnung auch für Batch-Maschinen ideal.

Des weiteren kann zur Restentleeung des Gehäuses eine Stauplatte im unteren Bereich öffenbar sein. Eine weitere einfache Möglichkeit besteht darin, dass ein oder mehrere verschliessbare Öffnungen zur Restentleeung in der Gehäusewand angeordnet sind. Bevorzugt geschieht die Restentleeung in den gleichen Schacht, durch den auch der Produktaustrag stattfindet.

Des weiteren ist daran gedacht, Feststoffe über ein- oder mehrwellige Eintragsschnecken in das Gehäuse einzutragen. Bevorzugt münden diese Eintragsschnecken bündig in die Gehäusewand ein, wobei dies beispielsweise auch seitlich oder durch eine Stirnplatte geschehen kann.

Allfällige Brüden, die noch beim Austrag vorhanden sind, sollen zusammen mit dem Produkt durch die Öffnung in der Gehäusewand austreten. Diese werden dann in einem anschliessenden Fallrohr entgegengesetzt zum Produkt abgezogen.

Insgesamt handelt es sich bei der vorliegenden Erfindung um einen Mischkneter, bei dem infolge der hervorragenden Selbstreinigung keine Klumpen entstehen. Hierdurch ist es auch möglich, den Mischkneter nur teilweise gefüllt zu betreiben, so dass der zudosierte Feststoff genügend Raum zur Verfügung hat. Hierdurch werden in dem Mischkneter keine lokal unzulässigen Beanspruchungen erzeugt.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine Frontansicht einer erfindungsgemässen Vorrichtung zur Durchführung von mechanischen, chemischen und/oder thermischen Prozessen (Mischkneter) mit abgenommener Stirnscheibe;
Figur 2 einen teilweise dargestellten Längsschnitt durch einen Mischkneter ähnlich Figur 1;
Figur 3 eine schematisch dargestellte Frontansicht eines weiteren Ausführungsbeispiels eines Mischkneters mit abgenommener Stirnscheibe;
Figur 4 einen teilweise dargestellten Längsschnitt des Mischkneters ähnlich Figur 3;
Figur 5 eine schematische Frontansicht von zwei weiteren Ausführungsbeispielen von in einem Mischkneter zusammenwirkenden Wellen;
Figur 7 eine schematische Darstellung eines Teils einer Abwicklung eines Mischkneters gemäss den Figuren 1 und 2.

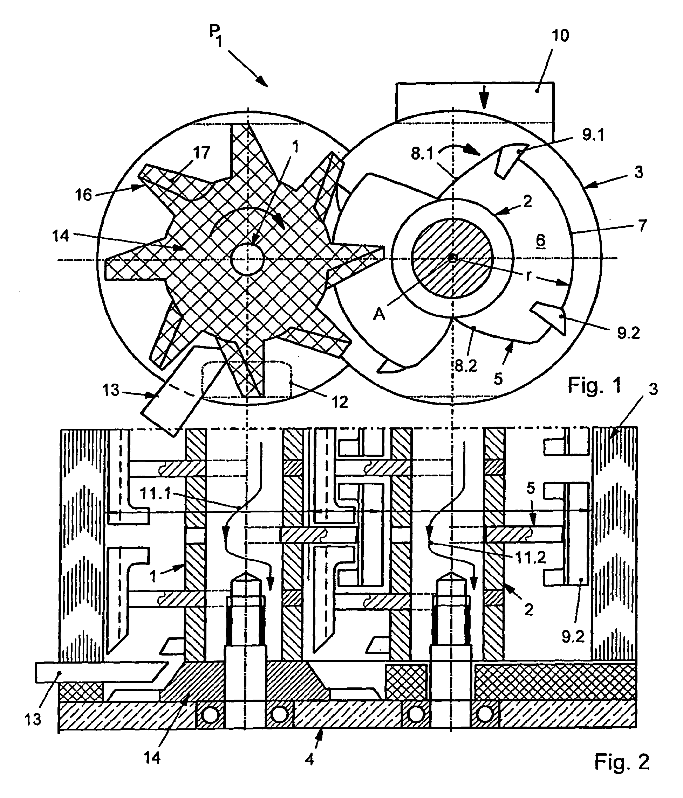

Gemäss den Figuren 1 und 2 befinden sich bei einem Mischkneter P1 zwei Wellen 1 und 2 in einem Gehäuse 3, wobei sowohl die Wellen 1 und 2 als auch das Gehäuse 3 mit einem temperierten Medium gefüllt sein können. Hierzu ist dann das Gehäuse 3 als ein Doppelmantelgehäuse ausgebildet. Frontseitig wird das Gehäuse 3 durch eine Stirnplatte 4 verschlossen.

Auf den Wellen 1 und 2 sitzen Misch- und Putzelemente 5, wobei diese im wesentlichen identisch ausgebildet sind. Sie bestehen aus einem Scheibenelement 6, welches eine Randkante 7 aufweist, die in etwa in einem Radius r um eine Achse A der Welle 1 bzw. 2 und in einem Bogensegment von etwa 90° herum verläuft. Von der Randkante 7 verlaufen dann bogenförmig Seitenkanten 8.1 und 8.2 zu der Welle 1 bzw. 2 hin. Derartige Scheibenelemente sind aufeinanderfolgend um 180° drehsymmetrisch auf der Welle 1 bzw. 2 angeordnet.

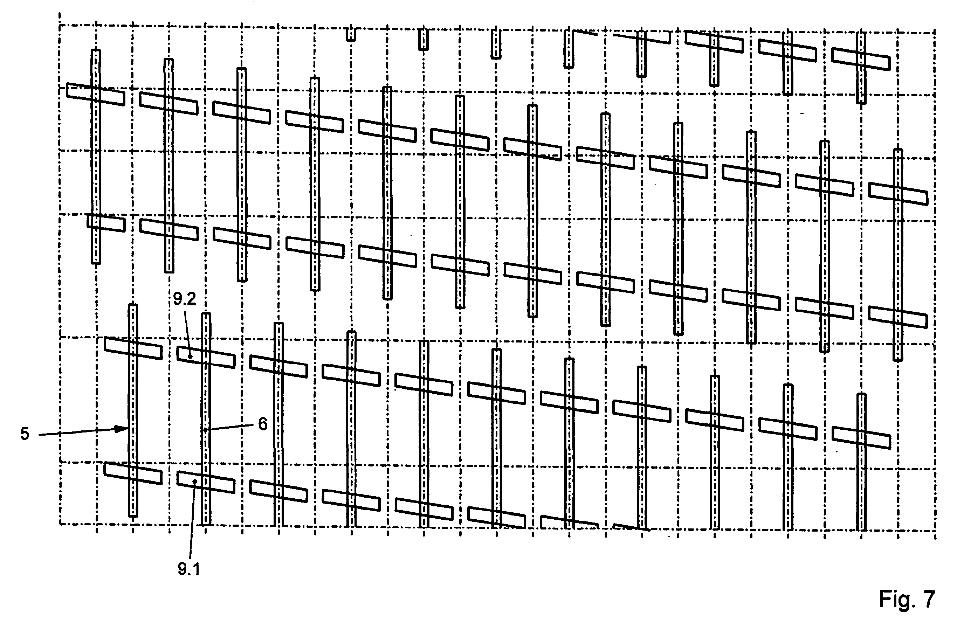

Des weiteren ist erkennbar, dass die Randkante 7 von zwei Barren 9.1 und 9.2 besetzt ist, die in etwa parallel zur Achse A verlaufen, jedoch in der in Figur 7 gezeigten Abwicklung schräg angestellt sind. Hierdurch kann die Fördertätigkeit für das zu bearbeitende Produkt beeinflusst werden.

Die Funktionsweise der vorliegenden Erfindung ist folgende:
Ein zu behandelndes Produkt gelangt über einen Eintrag 10 in das Innere des Gehäuses 3 und wird dort von den sich drehenden Misch- und Putzelementen 5 auf den Wellen 1 und 2 erfasst. Dabei wird das Produkt durch die Misch- und Putzelemente 5 intensiv geknetet und geschert, so dass es mit anderen Produkten, Zusätzen, Lösungsmitteln, Katalysatoren, Initiatoren usw. intensiv vermischt werden kann. Im Gegensatz zu bekannten Mischknetern kann bei der vorliegenden Erfindung nicht mehr zwischen einer Rührwelle mit Rührelementen und einer Putzwelle mit Putzelementen unterschieden werden. Gemäss der vorliegenden Erfindung übernehmen die Wellen 1 und 2 mit ihren Misch- und Putzelementen in gleichem Masse das Mischen des Produktes und das Putzen der anderen Welle bzw. der Innenwand des Gehäuses bzw. der Misch- und Putzelemente auf der anderen Welle.

Durch die beschriebene Anordnung der Scheibenelemente und deren Ausgestaltung wird eine optimale Radialmischung verwirklicht und insbesondere ein sogenannter Labyrintheffekt ermöglicht, wie er durch die Pfeile 11.1 und 11.2 für das Produkt dargestellt ist. Dabei wird vorausgesetzt, dass beide Wellen in einem Verhältnis von 1:1 gleichsinnig, im vorliegenden Fall im Uhrzeigersinn drehen.

Sobald das Produkt in Richtung der Stirnplatte 4 gelangt, d.h., zu einem gestrichelt angedeuteten Austrag 12, soll es erfindungsgemäss zu diesem Austrag 12 hin abgelenkt werden. Dies geschieht durch einen Deflektor 13 im Zusammenwirken mit einem Austragsstern 14. Beide Elemente sind ausdrücklich nicht Gegenstand der vorliegenden Erfindung. Während der Deflektor 13 statisch im Gehäuse festliegt, dreht sich der Austragsstern 14 mit der Welle 1 mit, wobei der Austragsstern mit einer Mehrzahl von Schneidzacken versehen ist, die das auszutragende Produkt in die Austragsöffnung 12 hineindrücken. Die Schneidzacken besitzen in Drehrichtung Schneiden 17. Hierdurch wird von dem Produktstrom immer eine Portion abgeschnitten und durch die Austragsöffnung 12 gedrückt.

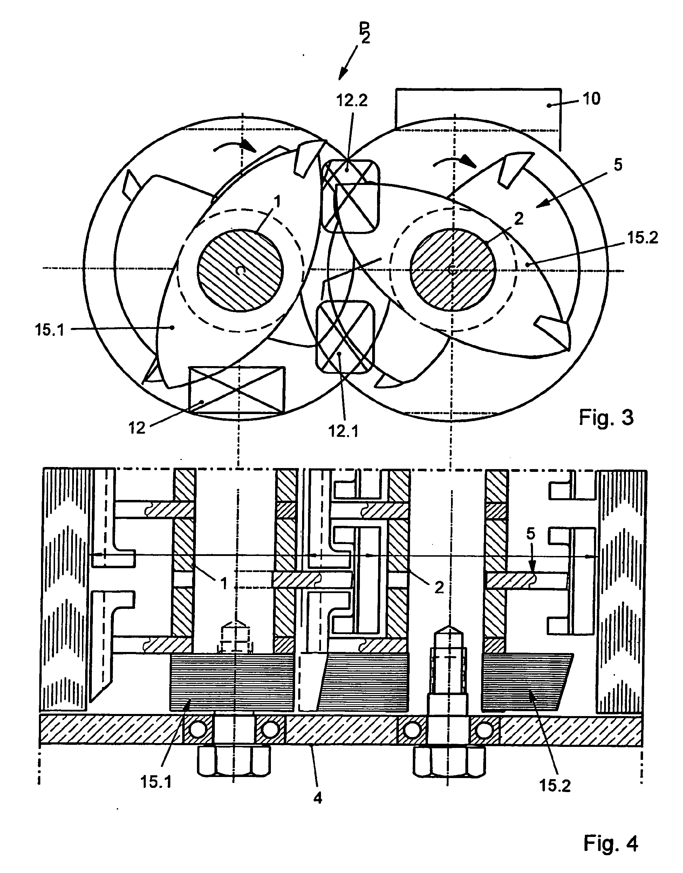

In den Figuren 3 und 4 ist eine andere Möglichkeit des Austrags aufgezeigt. Hier sind neben der Austragsöffnung 12 noch zwei weitere Auftragsöffnungen 12.1 und 12.2 zwischen den beiden Wellen 1 und 2 vorgesehen, durch welche ebenfalls das Produkt ausgetragen werden kann. Anstelle des Austragssterns sind jedoch auf den Wellen 1 und 2 Blechpakete 15.1 und 15.2 aufgesetzt, die in der Draufsicht gemäss Figur 3 eine ellipsenförmige Ausgestaltung aufweisen und welche ebenfalls nicht Gegenstand der vorliegenden Erfindung sind. Diese Anordnung gewährleistet ein portionsweises Austragen des Produktes. Der Austrag 12 wird nur von dem Blechpaket 15.1 bedient, was nur zwei Impulse pro Umdrehung bedeutet. Dagegen werden die Austragsöffnungen 12.1 und 12.2 sowohl von dem Blechpaket 15.1 als auch dem Blechpaket 15.2 überstrichen, so dass hier jeweils vier Impulse pro Umdrehung möglich sind. Durch diese Anordnung besteht die Möglichkeit, auch den Austrag des Produktes und insbesondere die Austragsmenge zu steuern.

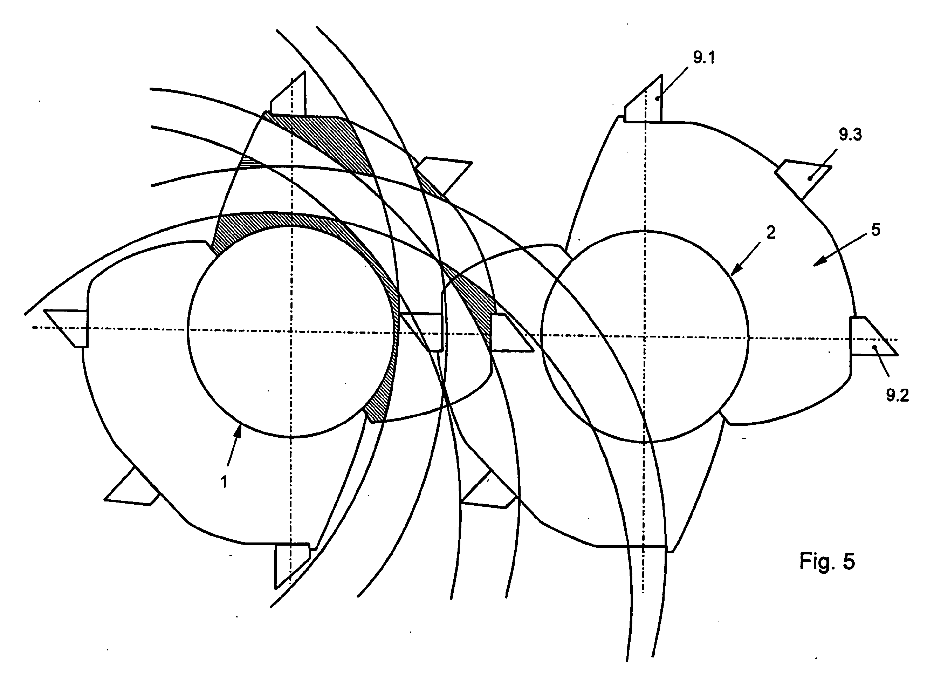

Gemäss Figur 5 soll zwischen den beiden Barren 9.1 und 9.2 noch ein dritter Barren 9.3 vorgesehen sein. Hierdurch wird nochmals die Reinigung der gegenüberliegenden Scheibenelemente und insbesondere der gegenüberliegenden Welle verbessert, was durch gestrichelte Bereiche angedeutet ist.

### Bezugszeichenliste

| | | | | | |
|---|---|---|---|---|---|
| 1 | Welle | 34 | | 67 | |
| 2 | Welle | 35 | | 68 | |
| 3 | Gehäuse | 36 | | 69 | |
| 4 | Stirnplatte | 37 | | 70 | |
| 5 | Misch-und Putzelement | 38 | | 71 | |
| 6 | Scheibenelement | 39 | | 72 | |
| 7 | Randkante | 40 | | 73 | |
| 8 | Seitenkante | 41 | | 74 | |
| 9 | Barren | 42 | | 75 | |
| 10 | Eintrag | 43 | | 76 | |
| 11 | Pfeil (Produkt) | 44 | | 77 | |
| 12 | Austragsöffnung | 45 | | 78 | |
| 13 | Deflektor | 46 | | 79 | |
| 14 | Austragsstern | 47 | | | |
| 15 | Blechpaket | 48 | | A | Achse |
| 16 | Zacken | 49 | | | |
| 17 | Schneide | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | P | Mischkneter |
| 29 | | 62 | | | |
| 30 | | 63 | | r | Radius |
| 31 | | 64 | | | |
| 32 | | 65 | | | |
| 33 | | 66 | | | |

## Patentansprüche

1. Vorrichtung zur Durchführung von mechanischen, chemischen und/oder thermischen Prozessen in einem Gehäuse (3) mit Misch- und Putzelementen (5) an Wellen (1,2), wobei die Misch- und Putzelemente (5) der Wellen (1,2) bei deren Drehung um ihre Achsen ineinander greifen und zumindest auf einer Welle (1,2) jeweils zwei in axialer Richtung aufeinander folgende Misch- und Putzelemente (5) um 180° drehsymmetrisch zueinander um die Achse (A) der Welle (1,2) auf dieser angeordnet sind,
**dadurch gekennzeichnet,**
**dass** die Misch- und Putzelemente (5) jeweils aus einem Scheibenelement (6) bestehen und das Scheibenelement (6) eine äussere Randkante (7) aufweist, die um einen Radius (r) in einem Bogensegment von 90° oder darüber um die Achse (A) der Welle (1, 2) verläuft und an die beidseits zur Welle (1, 2) hin verlaufende Seitenkanten (8.1, 8.2) anschliessen, wobei auf der Randkante (7) jeweils ein oder mehrere Barren (9.1, 9.2) aufsitzt/en.

2. Vorrichtung nach Anspruch 1, **dadurch gekennzeichnet, dass** die Misch- und Putzelemente (5) auf beiden Wellen (1,2) identisch ausgebildet sind.

3. Vorrichtung nach Anspruch 1 oder 2, **dadurch gekennzeichnet, dass** sich zwischen den Barren (9.1,9.2) ein Mittelbarren (9.3) befindet.

4. Vorrichtung nach wenigstens einem der Ansprüche 1 bis 3, **dadurch gekennzeichnet, dass** zur Restentleeung des Gehäuses (3) eine Stauplatte im unteren Bereich öffenbar ist.

5. Vorrichtung nach wenigstens einem der Ansprüche 1 bis 4, **dadurch gekennzeichnet, dass** in der Gehäusewand eine oder mehrere verschliessbare Öffnungen zur Restentleeung vorhanden sind.

6. Vorrichtung nach wenigstens einem der Ansprüche 1 bis 5, **dadurch gekennzeichnet, dass** die Öffnung in der Gehäusewand zur Restentleeung in den gleichen Schacht wie der Produktaustrag mündet.

7. Vorrichtung nach wenigstens einem der Ansprüche 1 bis 6, **dadurch gekennzeichnet, dass** Feststoffe über ein- oder mehrwellige Eintragsschnecken, die ggf. bündig in die Gehäusewand einmünden, in das Gehäuse (3) eingetragen werden.

8. Vorrichtung nach wenigstens einem der Ansprüche 1 bis 7, **dadurch gekennzeichnet, dass** infolge guter Selbstreinigung der Vorrichtung keine Klumpen entstehen und dadurch die Vorrichtung auch nur teilweise gefüllt betrieben werden kann, so dass der zudosierte Feststoff genügend Raum zur Verfügung hat, ohne in der Vorrichtung lokale unzulässige Beanspruchungen zu erzeugen.

9. Vorrichtung nach wenigstens einem der Ansprüche 1 bis 8, **dadurch gekennzeichnet, dass** allfällige Brüden in der Vorrichtung zusammen mit dem Produkt durch die Öffnung in der Gehäusewand treten und in einem anschliessenden Fallrohr entgegengesetzt zum Produkt abgezogen werden.

## Claims

1. A device for carrying out mechanical, chemical and/or thermal processes in a housing (3) with mixing and cleaning elements (5) on shafts (1, 2), the mixing and cleaning elements (5) of the shafts (1, 2), upon the rotation thereof about their axes, meshing in one another, and at least on one shaft (1, 2) in each case two mixing and cleaning elements (5) which succeed one another in the axial direction being arranged rotationally symmetrically to one another by 180° about the axis (A) of the shaft (1, 2) on said shaft, **characterised in that** the mixing and cleaning elements (5) in each case consist of a disc element (6) and the disc element (6), has an outer marginal edge (7) which extends by a radius (r) in an arc segment of 90° or above about the axis (A) of the shaft (1, 2) and which is adjoined by lateral edges (8.1, 8.2) extending on both sides towards the shaft (1, 2), with in each case one or more bars (9.1, 9.2) being seated on the marginal edge (7).

2. A device according to Claim 1, **characterised in that** the mixing and cleaning elements (5) are formed identically on both shafts (1, 2).

3. A device according to Claim 1 or 2, **characterised in that** a middle bar (9.3) is located between the bars (9.1, 9.2).

4. A device according to at least one of Claims 1 to 3, **characterised in that** a blocking plate in the lower region can be opened for emptying residual material from the housing (3).

5. A device according to at least one of Claims 1 to 4, **characterised in that** one or more closable openings are present in the housing wall for emptying residual material.

6. A device according to at least one of Claims 1 to 5, **characterised in that** the opening in the housing wall for emptying residual material opens into the same shaft as the product discharge.

7. A device according to at least one of Claims 1 to 6, **characterised in that** solids are introduced into the housing (3) via single-shaft or multi-shaft feed screws, which optionally open flush into the housing wall.

8. A device according to at least one of Claims 1 to 7, **characterised in that** as a result of good self-cleaning of the device no lumps are produced, and as a result the device can be operated also in an only partially filled state, so that the admetered solids have sufficient space available without producing impermissible local stresses in the device.

9. A device according to at least one of Claims 1 to 8, **characterised in that** any vapours in the device together with the product pass through the opening in the housing wall and are withdrawn in an adjoining downpipe in the opposite direction to the product.

## Revendications

1. Dispositif de mise en oeuvre de procédés mécaniques, chimiques et/ou thermiques dans un boîtier (3) avec des éléments de mélange et de nettoyage (5) sur les arbres (1, 2), les éléments de mélange et de nettoyage (5) des arbres (1, 2) venant en prise l'un avec l'autre lors de leur rotation autour de leurs axes et au moins sur un arbre (1, 2) étant disposés chaque fois deux éléments de mélange et de nettoyage (5) se suivant dans une direction axiale de manière symétrique en rotation de 180° entre eux autour de l'axe (A) de l'arbre (1, 2) sur ce dernier,
**caractérisé par le fait**
**que** les éléments de mélange et nettoyage (5) se composent, chacun, d'un élément de disque (6) et que l'élément de disque (6) présente un bord extérieur (7) qui s'étend selon un rayon (r) d'un segment d'arc de 90° ou plus autour de l'axe (A) de l'arbre (1, 2) et que suivent de part et d'autre des bords latéraux (8.1, 8.2) s'étendant vers l'arbre (1, 2), sur le bord (7) se trouvant chaque fois une ou plusieurs barres (9.1, 9.2).

2. Dispositif selon la revendication 1, **caractérisé par le fait que** les éléments de mélange et de nettoyage (5) sur les deux arbres (1, 2) sont réalisés identiques.

3. Dispositif selon la revendication 1 ou 2, **caractérisé par le fait qu'**entre les barres (9.1, 9.2) se trouve une barre centrale (9.3).

4. Dispositif selon au moins l'une des revendications 1 à 3, **caractérisé par le fait que** pour le vidage résiduel du boîtier (3) peut être ouverte une plaque de déflexion dans la zone inférieure.

5. Dispositif selon au moins l'une des revendications 1 à 4, **caractérisé par le fait que** dans la paroi de boîtier sont présentes une ou plusieurs ouvertures pouvant être obturées pour le vidage résiduel.

6. Dispositif selon au moins l'une des revendications 1 à 5, **caractérisé par le fait que** l'ouverture dans la paroi de boîtier pour le vidage résiduel aboutit dans le même puits que la sortie de produit.

7. Dispositif selon au moins l'une des revendications 1 à 6, **caractérisé par le fait que** les matières solides sont entrées dans le boîtier (3) par l'intermédiaire de vis sans fin d'entrée à un ou plusieurs arbres qui aboutissent éventuellement à fleur dans la paroi de boîtier.

8. Dispositif selon au moins l'une des revendications 1 à 7, **caractérisé par le fait que**, par suite d'un bon auto-nettoyage du dispositif, il ne se produit pas de mottes et que de ce fait le dispositif peut également fonctionner rempli partiellement, de sorte que la matière solide introduite dispose d'espace suffisant, sans générer des sollicitations locales inadmissibles dans le dispositif.

9. Dispositif selon au moins l'une des revendications 1 à 8, **caractérisé par** le fait les vapeurs éventuelles dans le dispositif entrent ensemble avec le produit à travers l'ouverture dans la paroi de boîtier et sont aspirées dans une chute qui vient s'y raccorder, contrairement au produit.
